# EUROPEAN PATENT APPLICATION

(11) **EP 4 714 690 A1**
(43) Date of publication of application: **25.03.2026**
(21) Application number: 24201075.9
(22) Date of filing: 18.09.2024
(51) Int. Cl.: B60G 17/018

(54) **SYSTEM AND METHOD FOR DETERMINING A TRAILER CONNECTION TYPE**

(71) Applicant: Volvo Truck Corporation, 405 08 Göteborg (SE)
(72) Inventor: Newton, Robert, Greensboro, 27401-2236 (US); Subramanian, Chidambaram, Jamestown, NC, 27282 (US)
(74) Representative: Valea AB

(57) **Abstract**

The disclosure relates to computer system (400) comprising processing circuitry (402) configured to:
- obtain vehicle combination load information of at least one of a vehicle (2) and a trailer (3) of a vehicle combination, the vehicle (2) and the trailer (3) being connected to each other; and
- determine a type of connection between the vehicle (2) and the trailer (3) based on said vehicle combination load information.

The disclosure further relates to a computer-implemented method and a vehicle (2).

## Description

### TECHNICAL FIELD

The disclosure relates generally to vehicles with trailers. In particular aspects, the disclosure relates to a computer system and a method for determining a trailer connection type. The disclosure further relates to a vehicle comprising the computer system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Heavy vehicles are usually configured for connection to one or more trailers. Trailers serve a variety of purposes, primarily focused on transporting goods, equipment, or other vehicles over long distances. Trailers come in numerous forms, including flatbeds, enclosed trailers, refrigerated trailers, and specialty designs tailored for specific cargo types. Depending on the type of trailer, there are different types of trailer connections with the towing vehicle. Some vehicles may be configured to connect to different trailer types using different connection types. In particular, some vehicles are configured to connect to semitrailers using a Back-of-Cab connection and full trailers using an End-of-Frame connection. These different connection types require different connections of one or more additional systems, such as e.g. a pneumatic braking system. These different connections are manually performed by an operator by opening/closing valves of the pneumatic system every time a trailer is connected to the vehicle. The manual connection is cumbersome for the operator and prone to errors which could lead to malfunctions in e.g. the pneumatic braking system.

Consequently, there is a need for an improved system and an improved method for determining a type of a trailer connection.

### SUMMARY

According to a first aspect of the disclosure, there is provided a computer system comprising processing circuitry configured to:
- obtain vehicle combination load information of at least one of a vehicle and a trailer of a vehicle combination, the vehicle and the trailer being connected to each other; and
- determine a type of connection between the vehicle and the trailer based on said vehicle combination load information.
The first aspect of the disclosure may seek to provide convenient and reliable trailer connection type determination. A technical benefit may include that the trailer connection type determination is performed with little or no action required by an operator. Hence, the trailer connection type determination may be less prone to user errors as compared to manual trailer connection type determination by an operator.

Optionally in some examples, including in at least one preferred example, the vehicle combination load information comprises at least one of: a gross combined vehicle weight of the vehicle combination, one or more drive axle loads of the vehicle and/or the trailer, and a weight of the vehicle. A technical benefit may include an accurate trailer connection type determination.

Optionally in some examples, including in at least one preferred example, the vehicle comprises an air suspension system and the processing circuitry is further configured to:
- obtain at least a portion of the vehicle combination load information by evaluating data from the air suspension system, in particular by evaluating a respective air pressure and/or a respective suspension height of at least one respective axle of the vehicle or the trailer.
A technical benefit may include an efficient determination of the trailer connection type by evaluating parameters already known from the air suspension system. Thus, the need for additional sensors for measuring the axle loads may be reduced or even eliminated. Further, the accuracy of measured or estimated load values may be appropriately high by taking into account the air pressures and suspension heights at respective axles. Hence, an accurate trailer connection type determination may be achieved.

Optionally in some examples, including in at least one preferred example, the vehicle comprises a brake system, and the processing circuitry is further configured to:
- obtain at least a portion of the vehicle combination load information by evaluating data from the brake system, in particular by evaluating accelerations and/or yaw rates obtained from the brake system.
A technical benefit may include an efficient determination of the trailer connection type by evaluating parameters already known by the brake system. Thus, the need for additional sensors for measuring the axle loads may be reduced or even eliminated. Further, the accuracy of measured or estimated load values may be appropriately high by taking into account yaw rates and accelerations measured by the brake system. Hence, an accurate trailer connection type determination may be achieved.

Optionally in some examples, including in at least one preferred example, the processing circuitry is further configured to:
- obtain at least a portion of the vehicle combination load information from a set of axle load sensors comprising at least one axle load sensor, each axle load sensor being adapted to issue information indicative of an axle load of an axle of the vehicle or the trailer.
A technical benefit may include an accurate estimation of vehicle combination load information. Hence, an accurate determination of the trailer connection type may be provided.

Optionally in some examples, including in at least one preferred example, the processing circuitry is configured to:
- determine a trailer type of the trailer, in particular the processing circuitry is configured to determine whether the trailer type is a semi-trailer or a full trailer, on the basis of the vehicle combination load information; and
- determine the type of connection between the vehicle and the trailer based on the determined trailer type.
A technical benefit may include a simplified determination of the trailer connection type based on the trailer type, since each trailer type may be associated with a respective trailer connection type.

Optionally in some examples, including in at least one preferred example, the processing circuitry is configured to:
- determine the type of connection between the vehicle and the trailer such that the system determines if the connection type between the vehicle and the trailer is a back of cab connection or an end of frame connection.
A technical benefit may include a simplified system limited to the most common connection types. Moreover, the back of cab connection and the end of frame connection may be associated with different connections of one or more additional systems, such as e.g. a pneumatic braking system, between the tractor and the trailer. This in turn implies that information about which one of the two connection types that is currently used may be useful when controlling the one or more additional systems.

Optionally in some examples, including in at least one preferred example, the processing circuitry is configured to:
- in response to determining that the trailer type is a semi-trailer, determine that the connection type between the vehicle and the trailer is the back of cab connection, and/or
- in response to determining that the trailer type is a full trailer, determine that the connection between the vehicle and the trailer is the end of frame connection.
A technical benefit may include a simple and robust determination of the trailer type connection. In practice, a semi-trailer may be associated with the back of cab connection type. A semi-trailer herein is referred to a trailer without a front axle, i.e. the front part of the trailer is supported by the towing vehicle. Connection lines, such as pneumatic or electric connections, of the semi-trailer may therefore most often be connected at the back of the cab. Full-trailers on the other hand may commonly be associated with the end of frame connection type. Full trailers are supported by their own front axle. For the full trailer, connection lines may most often be connected at the end of the frame of the towing vehicle. Hence, the trailer connection type may be conveniently determined by determining the trailer type being one of a semi-trailer and a full trailer.

Optionally in some examples, including in at least one preferred example, the processing circuitry is further configured to determine the type of trailer connection using a trained model, preferably an artificial neural network, such as a recurrent neural network, which uses the vehicle combination load information as input.
A technical benefit may include accurate determination of the trailer connection type. Since there are many different trailer types available, such as flatbeds, enclosed trailers, refrigerated trailers and many more, it may be difficult to find a clear correlation between the vehicle combination load information and the trailer connection type. Thus, using a trained model, i.e. a model that learns from known vehicle combinations, may help in providing a correlation between the vehicle load information and the trailer connection type in an efficient manner.

Optionally in some examples, including in at least one preferred example, the processing circuitry is further configured to determine the trailer type of the trailer using the trained model. As mentioned before the trailer type may be associated with a connection type. Thus, also the trailer type may be determined by the trained model. Thereby, the accuracy and robustness of the trailer type determination may be further increased.

Optionally in some examples, including in at least one preferred example, the trained model has been trained by training data for different trailer connection types. A technical benefit may include efficient training of the model by data that may be already available.

Optionally in some examples, including in at least one preferred example, the training data comprises vehicle combination load information for a plurality of vehicle configurations. A technical benefit may include increased robustness and accuracy of the trained model.

Optionally in some examples, including in at least one preferred example, the trained model is trained using a reinforced learning method. A technical benefit may include the capability of the trained model to continuously learn during use of the trained model, which may further increase the accuracy of the model thus the trailer connection type determination.

Optionally in some examples, including in at least one preferred example, the trained model is determined using any one of Linear Regression, Ridge Regression, Neural Network Regression, Lasso Regression, Decision Tree Regression, Random Forest, KNN Model, Support Vector Machines, Gausian Regression and Polynomial Regression.
A technical benefit may include improved accuracy and robustness of the trained model and thus the trailer connection type determination.

The computer system of any preceding claim, wherein the processing circuitry is further configured to:
- submit information indicative of the determined type of trailer connection to a user. The user may herein be an operator of the vehicle. For example, the information may be submitted to a vehicle information system comprising a display. Hence, the determined type of trailer connection may be shown to the operator. A technical benefit may include improved awareness of the operator of the determined connection type giving the operator the ability to react to the determined connection type.

Optionally in some examples, including in at least one preferred example, the processing circuitry is further configured to:
- receive an overriding command from a user, and
- override the determined trailer connection type with a correct trailer connection type.
A technical benefit may include controllability over the determined trailer connection type, particularly to correct incorrect determination of the trailer connection type by the computer system.

Optionally in some examples, including in at least one preferred example, the processing circuitry is further configured to:
- update the trained model based on the overriding command.
A technical benefit may include improved accuracy and robustness of the trained model, since it is able to learn from incorrect determinations of the trailer connection type. Hence, the trained model may be able to learn over time and become better in determining the correct trailer connection type.

Optionally in some examples, including in at least one preferred example, the processing circuitry is further configured to:
- based on the determined type of trailer connection, control the vehicle.
A technical benefit may include improved driving performance of the vehicle.

Optionally in some examples, including in at least one preferred example, the processing circuitry is further configured to:
- based on the determined type of trailer connection, issue control information to control valves of the vehicle to connect a pneumatic system of the vehicle to a pneumatic system of the trailer.
A technical benefit may include facilitated trailer connection compared to manual opening and closing of respective control valves depending on the trailer connection type by an operator of the vehicle.

Optionally in some examples, including in at least one preferred example, the processing circuitry is further configured to:
- based on the determined type of trailer connection, issue control information to control a braking system, such as ASB or ESP, of the vehicle and/or the trailer.
A technical benefit may include improved braking performance of the vehicle.

According to a second aspect of the disclosure, there is provided a vehicle being configured to connect to a trailer, the vehicle comprising the computer system of the first aspect. The second aspect of the disclosure may seek to convenient and reliable trailer connection type determination. A technical benefit may include that the trailer connection type determination is performed with little or no action required by an operator.

According to a third aspect of the disclosure, there is provided a computer-implemented method for determining a type of trailer connection of a vehicle combination, the method comprising:
- obtaining, by processing circuitry of a computer system, vehicle combination load information of at least one of a vehicle and a trailer of the vehicle combination, the vehicle and the trailer being connected to each other; and
- determining, by the processing circuitry, a type of connection between the vehicle and the trailer based on said vehicle combination load information.
Advantages and advantageous features of the method according to the third aspect are largely analogous to advantages and advantageous features of the computer system according to the first aspect.

Optionally in some examples, including in at least one preferred example, the vehicle combination load information comprises at least one of: a gross combined vehicle weight of the vehicle combination, one or more drive axle loads of the vehicle and/or the trailer, and a weight of the vehicle.

Optionally in some examples, including in at least one preferred example, the vehicle comprises an air suspension system and the method further comprises:
- obtaining, by the processing circuitry, at least a portion of the vehicle combination load information by evaluating data from the air suspension system, in particular by evaluating a respective air pressure and/or a respective suspension height of at least one respective axle of the vehicle or the trailer.

Optionally in some examples, including in at least one preferred example, the vehicle comprises a brake system and the method further comprises:
- obtaining, by the processing circuitry, at least a portion of the vehicle combination load information by evaluating data from the brake system, in particular by evaluating accelerations and/or yaw rates obtained from the brake system.

Optionally in some examples, including in at least one preferred example, the method further comprises:
- obtaining, by the processing circuitry, at least a portion of the vehicle combination load information from a set of axle load sensors comprising at least one axle load sensor, each axle load sensor being adapted to issue information indicative of an axle load of an axle of the vehicle or the trailer.

Optionally in some examples, including in at least one preferred example, the method further comprises:
- determining, by the processing circuitry, a trailer type of the trailer, in particular determining, by the processing circuitry, whether the trailer type is a semi-trailer or a full trailer, on the basis of the vehicle combination load information; and
- determining, by the processing circuitry, the type of connection between the vehicle and the trailer based on the determined trailer type.

Optionally in some examples, including in at least one preferred example, the method further comprises:
- determining, by the processing circuitry, the type of connection between the vehicle and the trailer such that the system determines if the connection between the vehicle and the trailer is a back of cab connection or an end of frame connection.

Optionally in some examples, including in at least one preferred example, the method further comprises:
- in response to determining that the trailer type is a semi-trailer, determining, by the processing circuitry, that the connection type between the vehicle and the trailer is the back of cab connection, and/or
- in response to determining that the trailer type is a full trailer, determining, by the processing circuitry, that the connection type between the vehicle and the trailer is the end of frame connection.

Optionally in some examples, including in at least one preferred example, the method further comprises:
- determining, by the processing circuitry, the type of trailer connection using a trained model, preferably an artificial neural network, such as a recurrent neural network, which uses the vehicle combination load information as input.

Optionally in some examples, including in at least one preferred example, the method further comprises:
- determining, by the processing circuitry, the trailer type of the trailer using the trained model.

Optionally in some examples, including in at least one preferred example, the trained model has been trained by training data for different trailer connection types.

Optionally in some examples, including in at least one preferred example, the training data comprises vehicle combination load information for a plurality of vehicle configurations.

Optionally in some examples, including in at least one preferred example, the trained model is trained using a reinforced learning method.

Optionally in some examples, including in at least one preferred example, the trained model is determined using any one of Linear Regression, Ridge Regression, Neural Network Regression, Lasso Regression, Decision Tree Regression, Random Forest, KNN Model, Support Vector Machines, Gausian Regression and Polynomial Regression.

Optionally in some examples, including in at least one preferred example, the method further comprises:
- submitting, by the processing circuitry, information indicative of the determined type of trailer connection to a user.

Optionally in some examples, including in at least one preferred example, the method further comprises:
- receiving, by the processing circuitry, an overriding command from a user, and
- overriding, by the processing circuitry, the determined trailer connection type with a correct trailer connection type.

Optionally in some examples, including in at least one preferred example, the method further comprises:
- updating, by the processing circuitry, the trained model based on the overriding command.

Optionally in some examples, including in at least one preferred example, the method further comprises:
- based on the determined type of trailer connection, controlling, by the processing circuitry, the vehicle.

Optionally in some examples, including in at least one preferred example, the method further comprises:
- based on the determined type of trailer connection, issuing, by the processing circuitry, control information to control valves of the vehicle to connect a pneumatic system of the vehicle to a pneumatic system of the trailer.

Optionally in some examples, including in at least one preferred example, the method further comprises:
- based on the determined type of trailer connection, issuing, by the processing circuitry, control information to control a braking system, such as ABS or ESP, of the vehicle and/or the trailer.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1a** is a schematic side view of a vehicle combination according to examples.
**FIG. 1b** is a schematic side view of a vehicle combination according to examples.
**FIG. 2** is a block diagram illustrating a method according to an example.
**FIG. 3** is a flow chart illustrating a method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An aim of the present disclosure is to alleviate at least one drawback of the prior art, or at least to provide a suitable alternative. In particular, an aim of the present disclosure may to provide an improved determination of a trailer connection type of a vehicle combination with a towing vehicle (for brevity simply named "vehicle" throughout the disclosure) and at least one trailer. Further, an aim may be to provide each one of a system a method and a vehicle which may be capable of determining the trailer connection type with appropriate accuracy and robustness. The determined trailer connection type may be used for a convenient connection of the trailer system, such as the pneumatic systems to the vehicle, e.g. by controlling corresponding control valves. Thus, an aim of the present disclosure may be to make a manual operation of the control valves less needed and possibly even obsolete. Further, the connection type may also be used to control vehicle functions, such as a braking system, e.g. ABS or ESP of the vehicle or the vehicle combination. Thus, an aim of the present disclosure may be to improve the control of vehicle functions, such as a braking system.

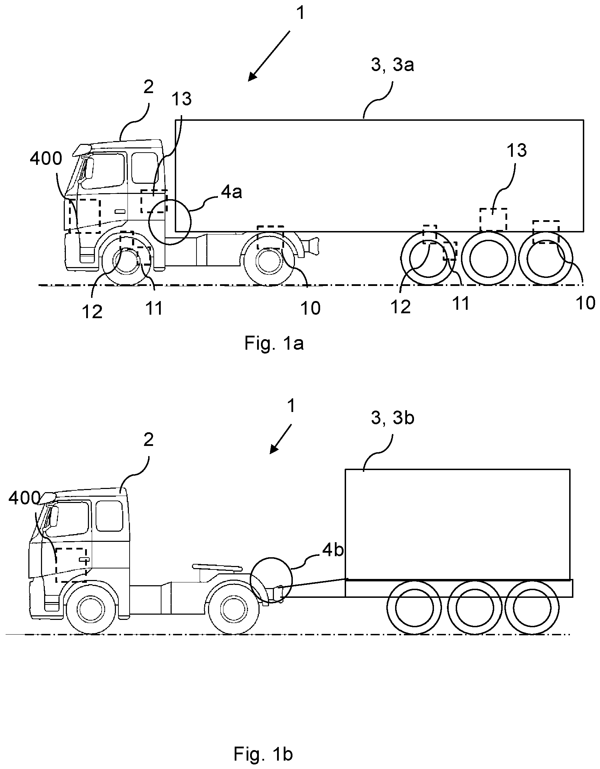

**FIG. 1a** is an exemplary side view of a vehicle combination according to an example. Fig. 1a illustrates a vehicle combination 1 with a vehicle 2 and a trailer 3 in the form of a semi-trailer 3a. A semi-trailer 3a lacks a front axle and thus has to be supported by the vehicle. The vehicle 2 comprises a computer system 400 for determination of the trailer connection type. A semi-trailer 3a is in connected state often close to the back of the cabin of the vehicle 2. Thus, a semi-trailer 3a is commonly connected to the vehicle in a so called Back of Cab connection type. Also, the connection lines for vehicle systems, such as the pneumatic system 13 or the electric system may be connected at or in the vicinity of the back of the cabin, i.e. in a region 4a indicated by a circle in Fig. 1a. The vehicle combination 1 shown in Fig. 1a may in some examples comprise a suspension system 10 for suspension of one or more axles of the vehicle and/or the trailer. Further, the vehicle combination 1 may comprise a brake system 11 on the vehicle and/or the trailer. Still further, in some examples, the vehicle combination 1 may comprise axle load sensors 12 for measuring the load on one or more axles of the vehicle 2 and/or the trailer 3.

**Fig. 1b** shows a corresponding side view of a vehicle combination according to an example for a full trailer 3b. The full trailer has its own front axle and is there connected to the vehicle 2 at the end of the frame of the vehicle 2. Also connections for the vehicle control systems are connected at the end of the frame of the vehicle 2, i.e. in a region 4b indicated by a circle in Fig. 1b.

Note that these are only exemplary illustrations and it is conceivable that the present disclosure is applicable to a plurality of different trailer types, such as Flatbed Trailers, Dry Van Trailers, Refrigerated Trailers, Step Deck Trailers, Lowboy Trailers, Tanker Trailers, Dump Trailers, Gooseneck Trailers, Utility Trailers, Car Hauler Trailers, Livestock Trailers, Enclosed Cargo Trailers, Conestoga Trailers, Tilt Trailers, and Logging Trailers. All of these trailer types may have different needs for control of connection valves or other vehicle functions, such as the braking system.

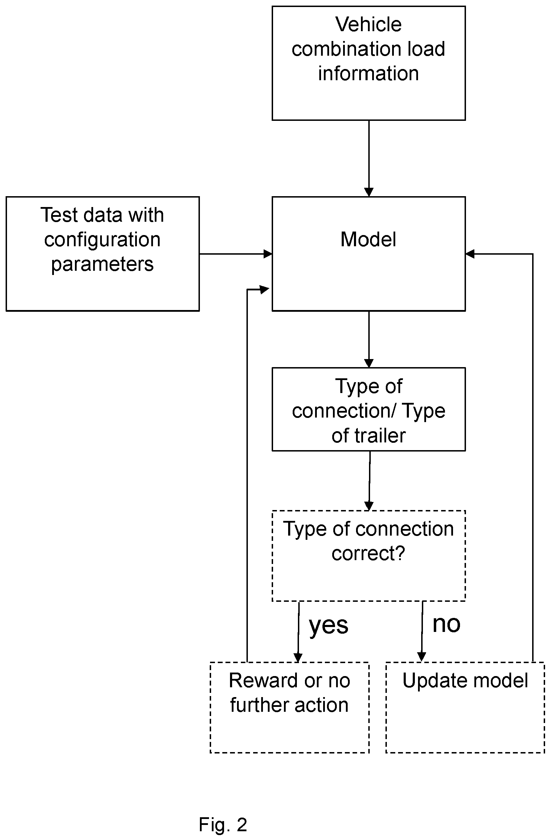

**Fig. 2** is a block diagram of the method according to examples describing the main ideas of the present disclosure. The present disclosure is based on the insight that vehicle combination load information may be used to determine the connection type of a vehicle/trailer connection. Further, vehicle combination load information may be used to determine the type of trailer 3. Vehicle combination load information may comprise information indicative of the weight of the vehicle 2, the weight of the trailer 3, the weight of the vehicle combination 1 and/or loads on an individual axle or individual axles of the vehicle 2 or the trailer 3. The vehicle combination load information is input to a model. In particular, the model may be a trained model. The model may have been trained in advance with test data comprising configurations parameters of vehicle combinations. The test data may comprise vehicle combination load information for a plurality of vehicle combinations. The model is used to determine the type of the trailer connection and/or the type of the trailer. In particular, the model may further be trained by a reinforced learning method, in particular with feedback from an operator. I.e. if an operator notifies the method of an incorrect determination of the trailer connection type, the model may learn from this observation and be updated, thereby becoming more accurate over time. If one the other hand, the operator confirms the determined connection type, the model may be rewarded or alternatively no further action is required.

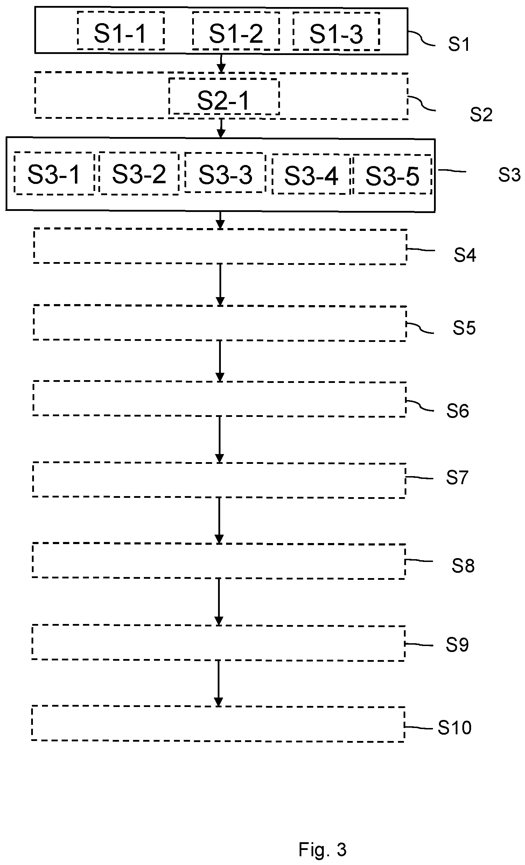

A computer-implemented method for determining a type of trailer connection is further exemplified and explained with respect to **Fig. 3****.** The method may be carried out by processing circuity of a computer system 400. The flow chart in Fig. 3 shows a number of actions that may be taken according to examples. Optional actions are marked by dashed lines.

**Action S1**: Obtaining vehicle combination load information of at least one of a vehicle 2 and a trailer 3 of the vehicle combination, the vehicle 2 and the trailer 3 being connected to each other.

The vehicle combination load information may comprise at least one of: a gross combined vehicle weight (GCVW) of the vehicle combination, one or more drive axle loads of the vehicle 2 and/or the trailer 3, and a weight of the vehicle 2. As mentioned above, the vehicle combination load information may be used as an indication for the trailer connection type or the trailer type being connected to the vehicle. The vehicle combination load information may be obtained in various ways. In some examples, the vehicle combination load information may be obtained by vehicle subsystems, such as suspension or braking systems. In other examples, the vehicle combination load information may comprise measured data from one or more sensors, e.g. load sensors at respective axles of the vehicle 2 or the trailer 3. In some examples, the vehicle combination load information may be obtained by processing data provided by sensors and/or vehicle subsystems.

Accordingly, the method may comprise any one of the optional actions S1-1, S1-2 or S 1-3 :
**Action S1-1:** obtaining at least a portion of the vehicle combination load information by evaluating data from an air suspension system 10, in particular by evaluating a respective air pressure and/or a respective suspension height of at least one respective axle of the vehicle 2 or the trailer 3.
   When the vehicle and or the trailer comprises an air suspension system 10, data indicative of the weights of the vehicle 2 and/or the trailer 3, and loads on individual axles of the vehicle combination 1 may already be present. Dedicated sensors may therefore not be needed. In particular, the air suspension system 10 may measure or calculate the air pressures and suspension height on individual axles, which can be used to obtain the vehicle combination load data.
**Action S1-2:** obtaining at least a portion of the vehicle combination load information by evaluating data from the brake system 11, in particular by evaluating accelerations and/or yaw rates obtained from the brake system 11.
   Similarly, the vehicle may comprise a brake system 11, such as ABS or ESP, which may have access to accelerations and yaw rates on vehicle or trailer axles. This data may be used to obtain the vehicle combination load information.
**Action S1-3:** obtaining, at least a portion of the vehicle combination load information from a set of axle load sensors 12 comprising at least one axle load sensor, each axle load sensor 12 being adapted to issue information indicative of an axle load of an axle of the vehicle 2 or the trailer 3.
   Alternatively or additionally, axle load sensors on one or more axles of the vehicle combination 1 may be used to measure axle loads, which may be indicative of the vehicle combination load information.
**Action S3:** determining a type of connection between the vehicle 2 and the trailer 3 based on said vehicle combination load information.
   The vehicle combination load information may be used to determine the type of connection between the vehicle 2 and the trailer 3. This may be done in numerous ways further explained below.
   In an example, the model is used to determine the trailer connection type based on a determined trailer type. Hence, the method comprises an optional action S2.
**Action S2:** determining a trailer type of the trailer 3, in particular determining whether the trailer type is a semi-trailer 3 or a full trailer 3b, on the basis of the vehicle combination load information.
   As mentioned before, the trailer type may be indicative of the trailer connection type. Thus, the trailer connection type may be determined by any one of the optional actions S3-1, S3-2, S3-3, S3-4:
**Action S3-1:** determining the type of connection between the vehicle 2 and the trailer 3 based on the determined trailer type.
**Action S3-2:** determining the type of connection between the vehicle 2 and the trailer 3 such that the system determines if the connection between the vehicle 2 and the trailer 3 is a back of cab connection or an end of frame connection.
**Action S3-3:** in response to determining that the trailer type is a semi-trailer 3a, determining that the connection type between the vehicle 2 and the trailer 3 is a back of cab connection.
**Action S3-4:** in response to determining that the trailer type is a full trailer 3b, determining S3-4 that the connection type between the vehicle 2 and the trailer 3 is an end of frame connection.
   Thereby, the method takes advantage of the fact that there is a strong correlation between the trailer type and the connection type, which increases the accuracy of the method.
   Further, the method may comprise an optional action S3-5:
**Action S3-5:** determining the type of trailer connection using a trained model, preferably an artificial neural network (ANN), such as a recurrent neural network (RNN), which uses the vehicle combination load information as input.

The trained model may have been trained by training data for different trailer connection types. In particular, the training data may comprise vehicle combination load information for a plurality of vehicle configurations. Hence, a trained model, such as an ANN or RNN, may have properties such as an appropriately high accuracy and robustness. Further, the trained model may be trained using a reinforced learning method. Thereby, the trained model may be able to continually improve accuracy and robustness during application.

In some examples, the trained model is determined using any one of Linear Regression, Ridge Regression, Neural Network Regression, Lasso Regression, Decision Tree Regression, Random Forest, KNN Model, Support Vector Machines (SVM), Gausian Regression and Polynomial Regression.

In order to communicate the determined connection type, the method may comprise an optional action S4:
**Action S4:** submitting information indicative of the determined type of trailer connection to a user.

The user may be an operator of the vehicle 2. The determined connection type may be indicated to the user via an information system, comprising indication lights, a display, a screen or any other suitable communication means.

The method may comprise giving the user the possibility to correct incorrectly determined connection types with the following optional actions:
**Action S5:** receiving an overriding command from a user.
**Action S6:** overriding the determined trailer connection type with a correct trailer connection type.

Further the method may comprise an optional **action S7** of updating the trained model the overriding command. Hence, the trained model is further improved during operation since it learns from incorrect predictions of the trailer connection type.

The method may further comprise an optional action S8:
**Action S8:** based on the determined type of trailer connection or the trailer type, controlling the vehicle 2.
Hence, the information obtained through the determination of the trailer connection type or the trailer type, may be used to control vehicle functions.
In one example, the determined connection type is used to control valves of the pneumatic connection between the vehicle 2 and the trailer 3, in accordance with an optional action S9.

**Action S9:** based on the determined type of trailer connection or the trailer type, issuing control information to control valves of the vehicle 2 to connect a pneumatic system 13 of the vehicle 2 to a pneumatic system 13 of the trailer 3.

This operation has otherwise to be performed manually by an operator. I.e. an operator has to manually open or close valves of the corresponding connections, e.g. at the back of the cabin or the end of the frame. Hence, by controlling the control valves according to the method, connecting a trailer to a vehicle may require less manual work and time.

The method may further comprise an optional action S 10.

**Action S10:** based on the determined type of trailer connection or the trailer type, issuing control information to control a braking system, such as ABS or ESP, of the vehicle 2 and/or the trailer 3.

Hence, the knowledge about the connection type and/or the trailer type may be used control the braking system. For example, trailers connected in different ways or different trailer types may benefit from adapted control parameters with the braking system. Thus, an improved braking performance or an improved stability of the vehicle combination 1 may be achieved.

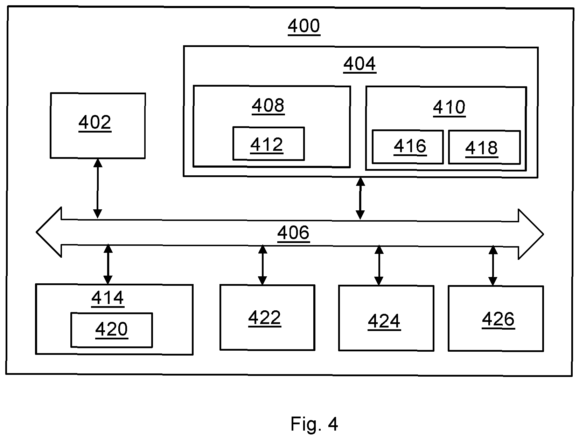

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units, such as the control unit 150 illustrated in FIG. 2), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the present disclosure are presented as a list of numbered Examples.

Example 1: A computer system (400) comprising processing circuitry (402) configured to:
- obtain vehicle combination load information of at least one of a vehicle (2) and a trailer (3) of a vehicle combination, the vehicle (2) and the trailer (3) being connected to each other; and
- determine a type of connection between the vehicle (2) and the trailer (3) based on said vehicle combination load information.

Example 2: The computer system (400) of example 1, wherein the vehicle combination load information comprises at least one of: a gross combined vehicle weight (GCVW) of the vehicle combination, one or more drive axle loads of the vehicle (2) and/or the trailer (3), and a weight of the vehicle (2).

Example 3: The computer system (400) of examples 1-2, wherein the vehicle (2) comprises an air suspension system (10) and wherein the processing circuitry (402) is further configured to:
- obtain at least a portion of the vehicle combination load information by evaluating data from the air suspension system (10), in particular by evaluating a respective air pressure and/or a respective suspension height of at least one respective axle of the vehicle (2) or the trailer (3).

Example 4: The computer system (400) of any one of the preceding examples, wherein the vehicle (2) comprises a brake system (11), and wherein the processing circuitry (402) is further configured to:
- obtain at least a portion of the vehicle combination load information by evaluating data from the brake system (11), in particular by evaluating accelerations and/or yaw rates obtained from the brake system (11).

Example 5: The computer system (400) of any one of the preceding examples, wherein the processing circuitry (402) is further configured to:
- obtain at least a portion of the vehicle combination load information from a set of axle load sensors comprising at least one axle load sensor, each axle load sensor (12) being adapted to issue information indicative of an axle load of an axle of the vehicle (2) or the trailer (3).

Example 6: The computer system (400) of any one of the preceding examples, wherein the processing circuitry (402) is configured to:
- determine a trailer type of the trailer (3), in particular the processing circuitry (402) is configured to determine whether the trailer type is a semi-trailer (3) or a full trailer (3b), on the basis of the vehicle combination load information; and
- determine the type of connection between the vehicle (2) and the trailer (3) based on the determined trailer type.

Example 7: The computer system (400) of any one of the preceding examples, wherein the processing circuitry (402) is configured to:
- determine the type of connection between the vehicle (2) and the trailer (3) such that the system determines if the connection type between the vehicle (2) and the trailer (3) is a back of cab connection or an end of frame connection.

Example 8: The computer system (400) of example 7, when dependent on example 6, wherein the processing circuitry (402) is configured to:
- in response to determining that the trailer type is a semi-trailer (3a), determine that the connection type between the vehicle (2) and the trailer (3) is the back of cab connection, and/or
- in response to determining that the trailer type is a full trailer (3b), determine that the connection type between the vehicle (2) and the trailer (3) is the end of frame connection.

Example 9: The computer system (400) of any preceding example, wherein the processing circuitry (402) is further configured to determine the type of trailer connection using a trained model, preferably an artificial neural network (ANN), such as a recurrent neural network (RNN), which uses the vehicle combination load information as input.

Example 10: The computer system (400) of any one of example 9, wherein the processing circuitry (402) is further configured to determine the trailer type of the trailer (3) using the trained model.

Example 11: The computer system (400) of example 9 or example 10, wherein the trained model has been trained by training data for different trailer connection types.

Example 12: The computer system (400) of example 11, wherein the training data comprises vehicle combination load information for a plurality of vehicle (2) configurations.

Example 13: The computer system (400) of any one of examples 9 - 12, wherein the trained model is trained using a reinforced learning method.

Example 14: The computer system (400) of examples 9 - 13, wherein the trained model is determined using any one of Linear Regression, Ridge Regression, Neural Network Regression, Lasso Regression, Decision Tree Regression, Random Forest, KNN Model, Support Vector Machines (SVM), Gausian Regression and Polynomial Regression.

Example 15: The computer system (400) of any preceding example, wherein the the processing circuitry (402) is further configured to:
- submit information indicative of the determined type of trailer connection to a user.

Example 16: The computer system (400) of any preceding example, wherein the the processing circuitry (402) is further configured to:
- receive an overriding command from a user, and
- override the determined trailer connection type with a correct trailer connection type.

Example 17: The computer system (400) of example 16, when dependent on example 9, wherein the processing circuitry (402) is further configured to:
- update the trained model based on the overriding command.

Example 18: The computer system (400) of any preceding example, wherein the processing circuitry (402) is further configured to:
- based on the determined type of trailer connection or the trailer type, control the vehicle (2).

Example 19: The computer system (400) of any preceding example, wherein the processing circuitry (402) is further configured to:
- based on the determined type of trailer connection or the trailer type, issue control information to control valves of the vehicle (2) to connect a pneumatic system (13) of the vehicle (2) to a pneumatic system (13) of the trailer (3).

Example 20: The computer system (400) of any preceding example, wherein the processing circuitry (402) is further configured to:
- based on the determined type of trailer connection or the trailer type, issue control information to control a braking system, such as ASB or ESP, of the vehicle (2) and/or the trailer (3).

Example 21: A vehicle (2) being configured to connect to a trailer (3), the vehicle (2) comprising the computer system (400) of any of examples 1-20.

Example 22: A computer-implemented method for determining a type of trailer connection of a vehicle combination, the method comprising:
- obtaining (S1), by processing circuitry (402) of a computer system (100), vehicle combination load information of at least one of a vehicle (2) and a trailer (3) of the vehicle combination, the vehicle (2) and the trailer (3) being connected to each other; and
- determining (S3), by the processing circuitry (402), a type of connection between the vehicle (2) and the trailer (3) based on said vehicle combination load information.

Example 23: The method of example 22, wherein the vehicle combination load information comprises at least one of: a gross combined vehicle weight (GCVW) of the vehicle combination, one or more drive axle loads of the vehicle (2) and/or the trailer (3), and a weight of the vehicle (2).

Example 24: The method of examples 22-23, wherein the vehicle (2) comprises an air suspension system (10), the method further comprising:
- obtaining (S1-1), by the processing circuitry (402), at least a portion of the vehicle combination load information by evaluating data from the air suspension system (10), in particular by evaluating a respective air pressure and/or a respective suspension height of at least one respective axle of the vehicle (2) or the trailer (3).

Example 25: The method of examples 22-24, wherein the vehicle (2) comprises a brake system (11), the method further comprising:
- obtaining (S 1-2), by the processing circuitry (402), at least a portion of the vehicle combination load information by evaluating data from the brake system (11), in particular by evaluating accelerations and/or yaw rates obtained from the brake system (11).

Example 26: The method of examples 22-25, further comprising:
- obtaining (S 1-3), by the processing circuitry (402), at least a portion of the vehicle combination load information from a set of axle load sensors comprising at least one axle load sensor, each axle load sensor (12) being adapted to issue information indicative of an axle load of an axle of the vehicle (2) or the trailer (3).

Example 27: The method of any one of examples 22-26, further comprising:
- determining(S2), by the processing circuitry (402), a trailer type of the trailer (3), in particular determining, by the processing circuitry (402), whether the trailer type is a semi-trailer (3) or a full trailer (3b), on the basis of the vehicle combination load information; and
- determining (S3-1), by the processing circuitry (402), the type of connection between the vehicle (2) and the trailer (3) based on the determined trailer type.

Example 28: The method of any one of examples 22-27, further comprising:
- determining (S3-2), by the processing circuitry (402), the type of connection between the vehicle (2) and the trailer (3) such that the system determines if the connection between the vehicle (2) and the trailer (3) is a back of cab connection or an end of frame connection.

Example 29: The method of example 28, when dependent on example 27, further comprising:
- in response to determining that the trailer type is a semi-trailer (3a), determining(S3-3), by the processing circuitry (402), that the connection type between the vehicle (2) and the trailer (3) is a back of cab connection, and/or
- in response to determining that the trailer type is a full trailer (3b), determining (S3-4), by the processing circuitry (402), that the connection type between the vehicle (2) and the trailer (3) is an end of frame connection.

Example 30: The method of any one of examples 22-29, further comprising:
- determining (S3-5), by the processing circuitry (402), the type of trailer connection using a trained model, preferably an artificial neural network (ANN), such as a recurrent neural network (RNN), which uses the vehicle combination load information as input.

Example 31: The method of example 30, further comprising:
- determining (S2-1), by the processing circuitry (402), the trailer type of the trailer (3) using the trained model.

Example 32: The method of example 30 or example 31, wherein the trained model has been trained by training data for different trailer connection types.

Example 33: The method of example 32, wherein the training data comprises vehicle combination load information for a plurality of vehicle (2) configurations.

Example 34: The method of examples 30 - 33, wherein the trained model is trained using a reinforced learning method.

Example 35: The method of examples 30 - 34, wherein the trained model is determined using any one of Linear Regression, Ridge Regression, Neural Network Regression, Lasso Regression, Decision Tree Regression, Random Forest, KNN Model, Support Vector Machines (SVM), Gausian Regression and Polynomial Regression.

Example 36: The method of examples 22-35, further comprising:
- submitting (S4), by the processing circuitry (402), information indicative of the determined type of trailer connection to a user.

Example 37: The method of examples 22-36, further comprising:
- receiving (S5), by the processing circuitry (402), an overriding command from a user, and
- overriding (S6), by the processing circuitry (402), the determined trailer connection type with a correct trailer connection type.

Example 38: The method of example 37, when dependent on example 30, further comprising:
- updating (S7), by the processing circuitry (402), the trained model based on the overriding command.

Example 39: The method of examples 22-38, further comprising:
- based on the determined type of trailer connection, controlling (S8), by the processing circuitry (402), the vehicle (2).

Example 40: The method of examples 22-39, further comprising:
- based on the determined type of trailer connection or the trailer type, issuing (S9), by the processing circuitry (402), control information to control valves of the vehicle (2) to connect a pneumatic system (13) of the vehicle (2) to a pneumatic system (13) of the trailer (3).

Example 41: The method of examples 22-40, further comprising:
- based on the determined type of trailer connection or the trailer type, issuing (S10), by the processing circuitry (402), control information to control a braking system, such as ABS or ESP, of the vehicle (2) and/or the trailer (3).

Example 42: A computer program product comprising program code for performing, when executed by the processing circuitry (402), the method of any of examples 22-41.

Example 43: A non-transitory computer-readable storage medium comprising instructions, which when executed by the processing circuitry (402), cause the processing circuitry (402) to perform the method of any of examples 22-41.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to:
- obtain vehicle combination load information of at least one of a vehicle (2) and a trailer (3) of a vehicle combination, the vehicle (2) and the trailer (3) being connected to each other; and
- determine a type of connection between the vehicle (2) and the trailer (3) based on said vehicle combination load information.

2. The computer system (400) of claim 1, wherein the vehicle combination load information comprises at least one of: a gross combined vehicle weight (GCVW) of the vehicle combination, one or more drive axle loads of the vehicle (2) and/or the trailer (3), and a weight of the vehicle (2).

3. The computer system (400) of claims 1-2, wherein the vehicle (2) comprises an air suspension system (10) and wherein the processing circuitry (402) is further configured to:
- obtain at least a portion of the vehicle combination load information from a set of axle load sensors (12) comprising at least one axle load sensor (12), each axle load sensor (12) being adapted to issue information indicative of an axle load of an axle of the vehicle (2) or the trailer (3),
and/or
wherein the vehicle (2) comprises an air suspension system (10), and wherein the processing circuitry (402) is further configured to:
- obtain at least a portion of the vehicle combination load information by evaluating data from the air suspension system (10), in particular by evaluating a respective air pressure and/or a respective suspension height of at least one respective axle of the vehicle (2) or the trailer (3),
and/or
wherein the vehicle (2) comprises a brake system (11), and wherein the processing circuitry (402) is further configured to:
- obtain at least a portion of the vehicle combination load information by evaluating data from the brake system (11), in particular by evaluating accelerations and/or yaw rates obtained by the brake system (11).

4. The computer system (400) of any one of the preceding claims, wherein the processing circuitry (402) is configured to:
- determine a trailer type of the trailer (3), in particular the processing circuitry (402) is configured to determine whether the trailer type is a semi-trailer (3) or a full trailer (3b), on the basis of the vehicle combination load information; and
- determine the type of connection between the vehicle (2) and the trailer (3) based on the determined trailer type.

5. The computer system (400) of any one of the preceding claims, wherein the processing circuitry (402) is configured to:
- determine the type of connection between the vehicle (2) and the trailer (3) such that the system determines if the connection type between the vehicle (2) and the trailer (3) is a back of cab connection or an end of frame connection,
preferably wherein the processing circuitry (402) is configured to:
- in response to determining that the trailer type is a semi-trailer (3a), determine that the connection type between the vehicle (2) and the trailer (3) is the back of cab connection, and/or
- in response to determining that the trailer type is a full trailer (3b), determine that the connection type between the vehicle (2) and the trailer (3) is the end of frame connection.

6. The computer system (400) of any preceding claim, wherein the processing circuitry (402) is further configured to determine the type of trailer connection using a trained model, preferably an artificial neural network (ANN), such as a recurrent neural network (RNN), which uses the vehicle combination load information as input,
preferably wherein the processing circuitry (402) is further configured to determine the trailer type of the trailer (3) using the trained model,
preferably wherein the trained model has been trained by training data for different trailer connection types, preferably wherein the training data comprises vehicle combination load information for a plurality of vehicle configurations,
preferably wherein the trained model is trained using a reinforced learning method, preferably wherein the trained model is determined using any one of Linear Regression, Ridge Regression, Neural Network Regression, Lasso Regression, Decision Tree Regression, Random Forest, KNN Model, Support Vector Machines (SVM), Gausian Regression and Polynomial Regression.

7. The computer system (400) of any preceding claim, wherein the the processing circuitry (402) is further configured to:
- submit information indicative of the determined type of trailer connection to a user.

8. The computer system (400) of any preceding claim, wherein the the processing circuitry (402) is further configured to:
- receive an overriding command from a user,
- override the determined trailer connection type with a correct trailer connection type, and, optionally,
- update the trained model based on the overriding command.

9. The computer system (400) of any preceding claim, wherein the processing circuitry (402) is further configured to:
- based on the determined type of trailer connection or the trailer type, control the vehicle (2).

10. The computer system (400) of any preceding claim, wherein the processing circuitry (402) is further configured to:
- based on the determined type of trailer connection or the trailer type, issue control information to control valves of the vehicle (2) to connect a pneumatic system (13) of the vehicle (2) to a pneumatic system (13) of the trailer (3).

11. The computer system (400) of any preceding claim, wherein the processing circuitry (402) is further configured to:
- based on the determined type of trailer connection or the trailer type, issue control information to control a braking system, such as ASB or ESP, of the vehicle (2) and/or the trailer (3).

12. A vehicle (2) being configured to connect to a trailer (3), the vehicle (2) comprising the computer system (400) of any of claims 1-11.

13. A computer-implemented method for determining a type of trailer connection of a vehicle combination, the method comprising:
- obtaining (S1), by processing circuitry (402) of a computer system (100), vehicle combination load information of at least one of a vehicle (2) and a trailer (3) of the vehicle combination, the vehicle (2) and the trailer (3) being connected to each other; and
- determining (S3), by the processing circuitry (402), a type of connection between the vehicle (2) and the trailer (3) based on said vehicle combination load information.

14. A computer program product comprising program code for performing, when executed by the processing circuitry (402), the method of claim 13.

15. A non-transitory computer-readable storage medium comprising instructions, which when executed by the processing circuitry (402), cause the processing circuitry (402) to perform the method of claim 13.
